# EUROPÄISCHE PATENTSCHRIFT

(11) **EP 4 314 512 B1**
(45) Veröffentlichungstag und Bekanntmachung des Hinweises auf die Patenterteilung: **18.06.2025**
(21) Anmeldenummer: 22715627.0
(22) Anmeldetag: 22.03.2022
(51) Int. Cl.: F01P 11/02, F01P 5/10, F04D 13/16, F01P 11/06, B60K 11/02, B60K 1/00, B60K 11/04

(54) **KÜHLMODUL FÜR EIN KRAFTFAHRZEUG ZUM KÜHLEN EINER ANTRIEBSEINHEIT DES KRAFTFAHRZEUGS, SOWIE KRAFTFAHRZEUG UND VERFAHREN ZUM MONTIEREN EINES KRAFTFAHRZEUGS**
COOLING MODULE FOR A MOTOR VEHICLE FOR COOLING A DRIVE UNIT OF THE MOTOR VEHICLE, AND MOTOR VEHICLE AND METHOD FOR ASSEMBLING A MOTOR VEHICLE
MODULE DE REFROIDISSEMENT POUR UN VÉHICULE AUTOMOBILE DESTINÉ À REFROIDIR UNE UNITÉ D'ENTRAÎNEMENT DU VÉHICULE AUTOMOBILE, AINSI QUE VÉHICULE AUTOMOBILE ET PROCÉDÉ DE MONTAGE D'UN VÉHICULE AUTOMOBILE

(30) Priorität: 22.03.2021 DE 102021106969
(43) Veröffentlichungstag der Anmeldung: 07.02.2024
(73) Patentinhaber: Audi AG, 85045 Ingolstadt (DE)
(72) Erfinder: SZÉNÁSI, László Zoltán, 9025 Gyor (HU); ÁDÁM, Attila, 2089 Telki (HU)
(86) Internationale Anmeldenummer: PCT/EP2022/057396
(87) Internationale Veröffentlichungsnummer: WO 2022/200298

(56) Entgegenhaltungen:
- EP-A1- 1 201 889
- EP-A1- 3 255 262
- CN-U- 210 553 941
- FR-A1- 2 925 117
- FR-A1- 2 978 109
- FR-A3- 2 921 593

## Beschreibung

Die Erfindung betrifft ein Kühlmodul für ein Kraftfahrzeug zum Kühlen zumindest einer Antriebseinheit des Kraftfahrzeugs. Des Weiteren betrifft die Erfindung ein Kraftfahrzeug mit einem entsprechenden Kühlmodul. Ebenfalls betrifft die Erfindung ein Verfahren zum Montieren eines Kraftfahrzeugs mit einem Kühlmodul.

Fahrzeuge mit einem Verbrennungsmotor oder mit einem Elektromotor verwenden zur Kühlung des jeweiligen Motors komplexe Kühlsysteme. Beispielsweise entstehen bei der Verbrennung eines Kraftstoffes (Diesel oder Benzin) Temperaturen bis zu 500 Grad Celsius, welche für den Betrieb des Motors schädlich sind. Daher ist es notwendig, den Motor, insbesondere einen Verbrennungsmotor, auf eine vorgegebene Betriebstemperatur zu kühlen. Zum Kühlen weisen gängige Kühlsysteme in Kraftfahrzeugen einen Kühlkreislauf im Motorraum auf, wobei mit dem Kühlkreislauf ein Kühlmittel in den Motorraum gefördert wird. Durch das Kühlmittel kann eine entstehende Wärme des Motors oder durch andere Bauteile des Motors aufgenommen und beispielsweise mittels eines Kühlmittelkühlers an die Außenluft abgegeben werden. Somit erfolgt eine Zirkulation der Wärme mittels des Kühlkreislaufes. Dabei kann beispielsweise durch zusätzliche mechanische oder elektrisch angetriebene Lüfter der Abtransport der Wärme durch den Kühlmittelkühler (insbesondere am Kühlergrill angeordnet) verbessert werden. Um die Temperatur des Kühlmittels beziehungsweise des Motors relativ konstant zu halten, kann der Kühlmittelfluss durch ein Thermostat gesteuert werden.

Beispielsweise offenbart die EP 3 670 858 A1 eine Motortemperiereinheit zum Pumpen und/oder Verteilen eines Wärmeträgers. Mithilfe eines Stellorgans kann der Wärmeträger (Kühlwasser) eines Motors wie eines Elektromotors oder einer Verbrennungskraftmaschine gesteuert werden.

Aus der DE 10 2013 204 766 A1 ist eine elektrische Fahrzeugachsenvorrichtung bekannt, wobei diese einen Kühlkreislauf zum Kühlen von Fahrzeugkomponenten aufweist.

Die DE 10 2018 128 480 A1 offenbart ein Steuerungsverfahren eines Kühlsystems für ein Fahrzeug.

Beispielsweise ist des Weiteren aus der US 2012/0153718 A1 ein Kühlsystem für ein Fahrzeug bekannt, mit welchem ein Kühlkreislauf zum Kühlen eines Elektromotors gesteuert werden kann.

Ferner offenbart die EP 1 201 889 A1 eine Wasserkühleinheit für ein Fahrzeug mit einem Verbrennungsmotor, wobei das Aggregat über einen durch geeignete Leitungen gebildeten Hauptkreislauf, insbesondere mit mindestens einem Kühler zur Kühlung des Wassers oder eines ähnlichen Kühlmittel und mit den Kreisläufen für die Kühlung des Zylinderblocks und der Zylinderköpfe.

Ein Nachteil der bekannten Kühlsysteme von Fahrzeugen ist der, dass die Komponenten der Kühlsysteme an unterschiedlichsten Positionen in oder am Fahrzeug angeordnet sind. Dadurch ist die Integration von Kühlsystemen in Fahrzeugen komplex, da für jede Komponente ein eigener Bauraum beziehungsweise eine eigene Montageposition festgelegt werden muss.

Somit ist die Aufgabe der vorliegenden Erfindung, Kühlsysteme von Fahrzeugen bereitzustellen, mit denen eine einfachere Montage ermöglicht wird.

Diese Aufgabe wird durch ein Kühlmodul gemäß Anspruch 1, ein Kraftfahrzeug nach Anspruch 6 sowie ein Verfahren nach Anspruch 9 gelöst. Sinnvolle Weiterbildungen ergeben sich aus den Unteransprüchen.

Ein Aspekt der Erfindung betrifft ein Kühlmodul für ein Kraftfahrzeug zum Kühlen zumindest einer Antriebseinheit des Kraftfahrzeugs, mit
- einem Kühlmodulgehäuse, das folgende Komponenten aufweist:
   - einem Kühlmittelbehälter zum Bereitstellen eines flüssigen oder gasförmigen Kühlmediums;
   - einer ersten Schnittstelleneinheit zum Aufnehmen einer vorgegebenen Pumpeneinheit;
   - einer zweiten Schnittstelleneinheit zum Aufnehmen einer vorgegebenen Filtereinheit;
   - einer dritten Schnittstelleneinheit zum Aufnehmen einer vorgegebenen Wärmetauscheinheit.

Mithilfe des erfindungsgemäßen Kühlmoduls kann ein kompaktes, universelles und bauraumeinsparendes Kühlsystem für ein Fahrzeug bereitgestellt werden. Insbesondere enthalten das Kühlmodul und vor allem das Kühlmodulgehäuse die Schnittstelleneinheiten und den Kühlmittelbehälter. Somit enthält das Kühlmittelgehäuse neben dem Kühlmittelbehälter alle wichtigen Schnittstellen für die entsprechenden Komponenten zum Durchführen eines Kühlvorgangs beziehungsweise Kühlprozesses der zumindest einen Antriebseinheit (Elektromotor oder Verbrennungskraftmaschine) des Kraftfahrzeugs. Mit anderen Worten ist das Kühlmodulgehäuse des Kühlmoduls derart beschaffen, dass es alle benötigten Komponenten beziehungsweise Einheiten zum Durchführen des Kühlvorgangs aufnehmen kann. Hierzu kann das Kühlmodulgehäuse die verschiedensten Schnittstelleneinheiten beziehungsweise Schnittstellen zum Aufnehmen der entsprechenden Komponenten beinhalten.

Durch die Möglichkeit der Aufnahme beziehungsweise Abnahme der Komponenten an den jeweiligen Schnittstellen ermöglicht das Kühlmodulgehäuse des Kühlmoduls eine universelle und flexible Montage in Kraftfahrzeugen.

Das Kühlmodul kann als zusammengebaute Einheit platzsparend in einem Motorraum des Kraftfahrzeugs integriert werden. Insbesondere kann durch die universelle Ausgestaltung des Kühlmoduls eine einfache und unkompliziertere Montage, Demontage oder ein Austausch einfacher durchgeführt werden. Insbesondere kann das Kühlmodul jederzeit wieder aus dem Kraftfahrzeug entnommen werden und als Komponente in weiteren Fahrzeugen verwendet werden. Somit kann das Kühlmodul universell in den unterschiedlichsten Fahrzeugtypen beziehungsweise Fahrzeugarten verwendet werden.

Durch einen modularen Aufbau des Kühlmoduls ergeben sich Vorteile bei der Montage und insbesondere bei den Montageschritten beim Zusammenbau des Kraftfahrzeugs. Somit kann insbesondere die Sequenzierung der Montage des Kraftfahrzeugs verbessert werden. Des Weiteren kann das erfindungsgemäße Kühlmodul einen hohen Integrationsgrad in den verschiedensten Kraftfahrzeugen, insbesondere bei ZSB-Bauteilen. Insbesondere kann das Kühlmodul als Normteil oder als COP (Carry of Parts)-Teil verwendet werden.

Insbesondere kann das Kühlmodul in Kraftfahrzeugen oder in Lastkraftwägen oder in Fahrzeugen mit Verbrennungskraftmaschinen oder in Hybridfahrzeugen oder in Elektrofahrzeugen verwendet werden.

Das Kühlmodulgehäuse ist insbesondere als kompaktes Gehäuse ausgebildet, welches so beschaffen ist, dass es platzsparend im Fahrzeugmotorraum platziert werden kann. Mithilfe des Kühlmittelbehälters (Kühlmitteltank) kann das flüssige oder gasförmige Kühlmedium (beispielsweise Kühlwasser) oder die verschiedensten Arten von Kühlmedien zum Kühlen der Antriebseinheit des Kraftfahrzeugs bereitgestellt beziehungsweise gespeichert werden.

Beispielsweise können die erste Schnittstelleneinheit, die zweite Schnittstelleneinheit und die dritte Schnittstelleneinheit so am Kühlmodulgehäuse befestigt beziehungsweise angeordnet werden, dass die vorgegebenen Einheiten entsprechend ihrer Funktion und ihrer Größe optimal in das Kühlmodulgehäuse aufgenommen werden können. Insbesondere sind die Schnittstelleneinheiten derart platziert, dass die jeweils aufzunehmende Einheit so aufgenommen werden kann, dass eine möglichst funktionelle Verbindung beziehungsweise Anordnung der aufzunehmenden Einheiten gegeben ist. Insbesondere kann mithilfe des erfindungsgemäßen Kühlmoduls ein integriertes flüssigkeitsgekühltes System zum Kühlen einer Antriebseinheit des Kraftfahrzeugs bereitgestellt werden.

Ein Ausführungsbeispiel der Erfindung sieht vor, dass die Pumpeneinheit, die Filtereinheit und die Wärmetauscheinheit an den jeweiligen zugehörigen Schnittstelleneinheiten des Kühlmodulgehäuses angeordnet sind. Mit anderen Worten sind die Pumpeneinheit, die Filtereinheit und die Wärmetauscheinheit an der ersten Schnittstelleneinheit, der zweiten Schnittstelleneinheit und der dritten Schnittstelleneinheit befestigt beziehungsweise integriert. Somit sind alle Komponenten, welche um Durchführen des Kühlprozesses der Antriebseinheit des Kraftfahrzeugs benötigt werden, am Kühlmodulgehäuse verbaut beziehungsweise integriert beziehungsweise befestigt sind.

Insbesondere sind die Pumpeneinheit, die Filtereinheit und die Wärmetauschereinheit ausschließlich an den jeweils zugehörigen Schnittstelleneinheiten des Kühlmodulgehäuses befestigt. Dadurch kann das Kühlmodul kompakt und bauraumeinsparend eingesetzt werden.

Die Pumpeneinheit (mechanisch und/oder elektrisch betriebene Kühlmittelpumpe beziehungsweise Kühlwasserpumpe) dient dazu, das in dem Kühlmittelbehälter gespeicherte flüssige oder gasförmige Kühlmedium einem Kühlkreislauf bereitzustellen. Insbesondere dient die Pumpeneinheit zum Gewährleisten eines kontinuierlichen, zyklischen Kühlkreislaufes. Bei der Filtereinheit handelt es sich insbesondere um einen Filter (beispielsweise Partikelfilter), mit welchem das mit der Pumpeneinheit geförderte Kühlmedium nach Verunreinigungen und/oder Störobjekten gefiltert werden kann. Bei der Wärmetauscheinheit handelt es sich beispielsweise um einen Wärmetauscher beziehungsweise Wärmeübertrager. Mithilfe der Wärmetauschereinheit kann die von dem Kühlmedium aufgenommene Wärme der Antriebseinheit des Kraftfahrzeugs als thermische Energie zum Heizen beziehungsweise Erwärmen eines Fahrgastinnenraums beziehungsweise Fahrzeuginnenraums des Kraftfahrzeugs zu verwenden. Somit kann die von der Antriebseinheit abgegebene Wärme weiterverwendet werden. Somit kann ein verbesserter Wirkungsgrad erreicht werden. Insbesondere kann somit das Kühlmodul nicht nur zur Kühlung der Antriebseinheit, sondern gleichzeitig ohne großen Energiebedarf der Fahrgastinnenraum des Kraftfahrzeugs erhitzt beziehungsweise geheizt werden. Somit ergibt sich eine Doppelfunktionalität des Kühlmoduls.

In einem weiteren Ausführungsbeispiel der Erfindung ist vorgesehen, dass das Kühlmodulgehäuse eine weitere Schnittstelleneinheit aufweist, wobei an der weiteren Schnittstelleneinheit eine elektronische Steuerungseinheit anordenbar ist und insbesondere mit der elektronischen Steuerungseinheit die Pumpeneinheit steuerbar ist. Somit kann das Kühlmodulgehäuse neben den vorher genannten Schnittstelleneinheiten zumindest eine weitere Schnittstelleneinheit aufweisen. Dadurch kann das Kühlmodul noch universeller und platzsparender verwendet werden. Gegebenenfalls kann das Kühlmodulgehäuse weitere Schnittstelleneinheiten, insbesondere mehrere weitere Schnittstelleneinheiten, aufweisen. Somit kann das Kühlmodulgehäuse und somit auch das Kühlmodul je nach Fahrzeugtyp und/oder Fahrzeugart und/oder Anwendungsfall erweitert werden. Somit kann das Kühlmodul universeller bereitgestellt werden.

Optional kann die elektronische Steuerungseinheit an der weiteren Schnittstelleneinheit befestigt sein. Insbesondere ist die elektronische Steuerungseinheit ausschließlich an der weiteren Schnittstelleneinheit befestigt. Mithilfe der elektronischen Steuerungseinheit kann speziell die Pumpeneinheit gesteuert und/oder geregelt werden. Je nach aktuellem Zustand der Antriebseinheit (hinsichtlich der aktuellen Temperatur der Antriebseinheit) kann die Kühlleistung des Kühlmoduls erhöht werden. Somit kann mithilfe der elektronischen Steuerungseinheit beispielsweise eine Durchflussmenge des Kühlmediums eingestellt beziehungsweise angepasst werden. Für das Ansteuern der Pumpeneinheit kann des Weiteren ein Elektromotor (elektrische Versorgungseinheit) verwendet werden. Je nachdem, welche Kühlleistung aktuell notwendig ist, kann mithilfe dieses Elektromotors die Leistung der Pumpeneinheit erhöht oder erniedrigt werden. Beispielsweise kann die elektronische Steuerungseinheit als Steuerungsventil ausgebildet sein oder zumindest ein Steuerungsventil beinhalten. Mithilfe des Steuerungsventils kann der Kühlmediumfluss eingestellt werden.

Des Weiteren kann die elektronische Steuerungseinheit einen Kühlwasserregler (Thermostat) beinhalten. Mit diesem Kühlwasserregler (Thermostat) kann der Wasserumlauf (Kühlmediumumlauf) in Abhängigkeit von einer Kühlmediumtemperatur geregelt werden.

Es ist vorgesehen, dass das Kühlmodulgehäuse eine Lagerschnittstelle aufweist, wobei an der Lagerschnittstelle eine Gelenkwelleneinheit des Kraftfahrzeugs zur Lagerung der Lenkwelleneinheit anordenbar ist. Insbesondere dient die Lagerschnittstelle mit anderen Worten dazu, eine Gelenkwelleneinheit (Gelenkwelle des Kraftfahrzeugs) aufzunehmen und fest zu lagern. Somit kann das Kühlmodulgehäuse der der Komponenten für das Kühlen der Antriebseinheit eine zusätzliche Funktion beziehungsweise Funktionalität aufweisen. Das Kühlmodul kann derart im Motorraum des Kraftfahrzeugs positioniert beziehungsweise befestigt werden, dass das Kühlmodul zusätzlich zur Lagerung einer Gelenkwelle des Kraftfahrzeugs verwendet werden kann. Somit kann das Kühlmodul noch effizienter und platzsparender im Motorraum des Kraftfahrzeugs angeordnet werden. Das Kühlmodulgehäuse kann mithilfe der Lagerschnittstelle die Gelenkwelleneinheit des Kraftfahrzeugs aufnehmen, sodass die Gelenkwelleneinheit beweglich an der Schnittstelleneinheit befestigt ist. Dadurch kann auf zusätzliche Befestigungsvorrichtungen für zumindest eine Gelenkwelleneinheit des Kraftfahrzeugs verzichtet werden, wodurch der Bauraum des Motorraums des Kraftfahrzeugs effektiver ausgenutzt werden kann.

In einem Ausführungsbeispiel ist vorgesehen, dass ein Gehäuse des Kühlmittelbehälters zumindest bereichsweise, insbesondere vollständig, in das Kühlmodulgehäuse integriert ist. Mit anderen Worten kann der Kühlmittelbehälter bereits ein fester Bestandteil des Kühlmodulgehäuses sein. Somit können Teile des Kühlmodulgehäuses und Teile des Gehäuses des Kühlmittelbehälters vereint werden. Bereits grundsätzlich kann das Kühlmodulgehäuse das Gehäuse des Kühlmittelbehälters enthalten. Mit anderen Worten kann das Gehäuse des Kühlmittelbehälters bereits beim Herstellungsprozess des Kühlmodulgehäuses integriert werden. Deswegen kann das Kühlmodulgehäuse noch kompakter und bauraumeinsparender konzipiert werden. Dadurch kann das Kühlmodul noch universeller in den verschiedensten Fahrzeugen eingesetzt werden.

Speziell können das Kühlmodulgehäuse und das Gehäuse des Kühlmittelbehälters ein und dasselbe Gehäuse sein. Deshalb ist in diesem Fall das Gehäuse des Kühlmittelbehälters gleich dem Kühlmodulgehäuse. Daher wären die Schnittstelleneinheiten an einem gemeinsamen Gehäuse des Kühlmittelbehälters und des Kühlmoduls integriert.

Um das Kühlmodul noch platzsparender und kompakter verwenden zu können, ist des Weiteren vorgesehen, dass die Schnittstelleneinheiten des Kühlmodulgehäuses alle in einer gemeinsamen Hälfte des Kühlmodulgehäuses angeordnet sind. Durch eine kompakte Anordnung der Schnittstelleneinheiten in einer gemeinsamen Hälfte des Kühlmittelgehäuses kann die Form des Kühlmodulgehäuses und somit auch die Form des Kühlmoduls kompakt gehalten werden. Mit anderen Worten können die Schnittstelleneinheiten derart am Kühlmodulgehäuse angeordnet beziehungsweise integriert beziehungsweise befestigt sein, dass sie kompakt und unmittelbar benachbart zueinander angeordnet sind. Folglich kann verhindert werden, dass das Kühlmodul weit wegstehende Teile aufweist. Bei der Konzipierung des Kühlmodulgehäuses kann darauf geachtet werden, dass je nach Komponentenort die Schnittstelleneinheiten effizient am Kühlmodulgehäuse angeordnet werden. Bei der Anordnung der Schnittstelleneinheiten am Kühlmodulgehäuse kann darauf geachtet werden, dass je nach Einbausituation und/oder Einbauposition im Kraftfahrzeug die jeweiligen Geometrien und/oder Gegebenheiten des Motorraums berücksichtigt werden.

Ein weiterer Aspekt der Erfindung betrifft ein Kraftfahrzeug mit einem Kühlmodul nach einem Ausführungsbeispiel des vorher geschilderten Aspekts. Insbesondere können die Ausführungen beziehungsweise Ausführungsbeispiele des vorher geschilderten Aspekts als vorteilhafte Ausführungen des Kraftfahrzeugs angesehen werden.

Insbesondere beinhaltet das Kraftfahrzeug das Kühlmodul, wobei mithilfe des Kühlmoduls die zumindest eine Antriebseinheit (Verbrennungskraftmaschine oder Elektromotor) gekühlt werden kann. Dazu ist insbesondere das Kühlmodul derart ausgestaltet, dass es platzsparend und universell einsetzbar im Motorraum des Kraftfahrzeugs befestigt beziehungsweise angeordnet beziehungsweise positioniert ist. Insbesondere kann das Kühlmodul derart beschaffen sein, dass es an dem jeweiligen Fahrzeugtyp des Kraftfahrzeugs angepasst ist. Des Weiteren können bei der Konzipierung des Kühlmoduls die verschiedensten Anforderungsprofile, insbesondere hinsichtlich des jeweiligen Kraftfahrzeugs, berücksichtigt werden.

Bei dem Kraftfahrzeug kann es sich beispielsweise um einen Personenkraftwagen oder um einen Lastkraftwagen oder um einen Omnibus oder um ein Elektrofahrzeug oder um ein Hybridfahrzeug handeln.

In einem Ausführungsbeispiel ist vorgesehen, dass das Kühlmodul mittels einer Anbindungsstelle des Kühlmodulgehäuses mit der Antriebseinheit des Kraftfahrzeugs verbunden ist. Mit anderen Worten kann mit der Anbindungsstelle des Kühlmodulgehäuses dafür gesorgt werden, dass das Kühlmedium mittels des Kühlmoduls zur Kühlung der Antriebseinheit zur Antriebseinheit gefördert beziehungsweise gepumpt werden kann. Beispielsweise kann die Anbindungsstelle mit mehreren Befestigungen versehen sein, sodass das Kühlmodulgehäuse mittels mehrerer Befestigungen beziehungsweise Befestigungsvorrichtungen im Bereich der Antriebseinheit angeordnet werden kann, insbesondere wenn mithilfe der Anbindungsstelle das Kühlmodul mit der Antriebseinheit thermisch direkt verbunden wird. Mithilfe der Anbindungsstelle des Kühlmodulgehäuses oder mit einer zur Anbindungsstelle zusätzlichen Befestigungsvorrichtung kann das Kühlmodulgehäuse in einem Bereich eines Motorraums des Kraftfahrzeugs befestigt werden. Dabei kann das Kühlmodulgehäuse derart befestigt werden, dass es lösbar am Kraftfahrzeug befestigt ist. Somit kann das Kühlmodulgehäuse und insbesondere das komplette Kühlmodul jederzeit ausgebaut und gewechselt werden.

Insbesondere ist die Anbindungsstelle als mechanische Vorrichtung ausgebildet, welche insbesondere an dem Kühlmodulgehäuse angeordnet ist. Ebenso denkbar ist, dass die Anbindungsstelle eine zum Kühlmodulgehäuse separate Einheit ist, mit welcher das Kühlmodulgehäuse mit der Antriebseinheit verbunden werden kann. Beispielsweise kann die Anbindungsstelle aus mehreren Einzelteilen bestehen, welche um das Kühlmodulgehäuse entlang angeordnet sind.

In einem weiteren Ausführungsbeispiel ist vorgesehen, dass ein Kühlkreislauf der Antriebseinheit des Kraftfahrzeugs mit Kühlkanälen des Kühlmoduls verbunden sind, sodass das Kühlmedium des Kühlmoduls den Kühlkreislauf der Antriebseinheit zum Kühlen der Antriebseinheit zuführbar ist. Beispielsweise kann die Anbindungsstelle mehrere Kühlkanäle aufweisen, welche durch die Verbindung des Kühlmoduls mit der Antriebseinheit mit dem Kühlkreislauf der Antriebseinheit zusätzlich verbunden sind. Mithilfe der Kühlkanäle des Kühlmoduls kann das von dem Kühlmittelbehälter bereitgestellte Kühlmedium dem Kühlkreislauf bereitgestellt werden. Insbesondere wird mithilfe der Pumpeneinheit das Kühlmedium durch die Kühlkanäle gepumpt und somit dem Kühlkreislauf zugeführt. Speziell bildet der Kühlkreislauf der Antriebseinheit mit dem Kühlkanal des Kühlmoduls einen in sich geschlossenen Kreislauf. Der Kühlkreislauf ist insbesondere im Motorraum angeordnet und dient zur Aufnahme der Wärme der Antriebseinheit beziehungsweise weiterer Komponenten der Antriebseinheit.

Mithilfe des Kühlmediums kann ein Wärmeabtransport der Wärme der Antriebseinheit durchgeführt werden. Um das Kühlmedium abkühlen zu können beziehungsweise die aufgenommene Wärme abgeben zu können, beinhaltet der Kühlkreislauf der Antriebseinheit einen Kühlmittelkühler (am Kühlergrill angeordnet), mit welchem das Kühlmedium der Außenluft beziehungsweise der Außenumgebung des Kraftfahrzeugs abgeführt werden kann. Beispielsweise können an dem Kühlmittelkühler ein oder mehrere Lüfter (mechanisch oder elektrisch) angeordnet werden, die vor oder hinter dem Kühlmittelkühler angeordnet sind. Somit kann zusätzlich ein verbesserter Abkühlprozess des Kühlmediums erreicht werden. Insbesondere kann mithilfe des Kühlwasserreglers (Thermostat) dieser Vorgang überwacht werden, da erst bei Erreichen einer vorgegebenen Temperatur des Kühlmediums ein Abkühlen des Kühlmediums nötig ist.

Ein weiterer Aspekt der Erfindung betrifft ein Verfahren zum Montieren eines Kraftfahrzeugs mit einem Kühlmodul nach einem der vorhergehenden Aspekte, wobei die Pumpeneinheit, die Filtereinheit, die Wärmetauscheinheit und der Kühlmittelbehälter des Kühlmoduls in einem Motorraum des Kraftfahrzeugs gleichzeitig befestigt werden, indem ein Kühlmodulgehäuse des Kühlmoduls mit der Pumpeneinheit, der Filtereinheit, der Wärmetauscheinheit und dem Kühlmittelbehälter in dem Motorraum befestigt wird. Insbesondere kann mit dem vorgeschlagenen Verfahren ein Kühlmodul nach einem der vorherigen Aspekte und/oder einer Weiterbildung davon in einem Kraftfahrzeug montiert werden. Mit anderen Worten wird das Kühlmodul in einem Montageprozess des Kraftfahrzeugs mit dem Kraftfahrzeug vereint. Dabei werden die einzelnen Komponenten des Kühlmoduls (Pumpeneinheit, Filtereinheit, Wärmetauschereinheit und Kühlmittelbehälter) dadurch im Motorraum des Kraftfahrzeugs befestigt beziehungsweise integriert, indem diese Komponenten mit dem Kühlmodulgehäuse befestigt werden. Das Kühlmodulgehäuse, welches die verschiedenen Schnittstelleneinheiten zum Aufnehmen der jeweiligen Komponenten enthält, wird in dem Motorraum des Kraftfahrzeugs befestigt, und somit werden die einzelnen Komponenten, welche an der jeweiligen Schnittstelleneinheit befestigt werden, diese ebenfalls im Motorraum befestigt. Daher kann durch die einfache Montage des Kühlmodulgehäuses in dem Motorraum sämtliche Komponenten des Kühlmoduls gleichzeitig in dem Motorraum integriert beziehungsweise befestigt werden. Darum kann ein Montagevorgang des Kühlmoduls und insbesondere ein Montagevorgang des Kraftfahrzeugs effizienter durchgeführt werden.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Im Folgenden sind Ausführungsbeispiele der Erfindung beschrieben. Hierzu zeigt:
- Fig. 1: eine schematische Darstellung eines Kraftfahrzeugs mit einem Kühlmodul;
- Fig. 2: eine bespielhafte Darstellung des Kühlmoduls aus Fig. 1; und
- Fig. 3: eine weitere schematische Darstellung des Kühlmoduls aus Fig. 1.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

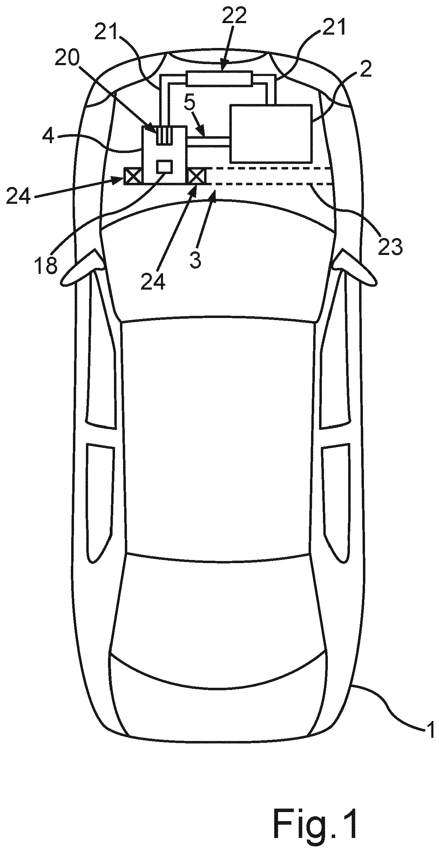

Die Fig. 1 zeigt ein Kraftfahrzeug 1 mit zumindest einer Antriebseinheit 2. Bei dem Kraftfahrzeug 1 kann es sich um einen Personenkraftwagen oder einen Lastkraftwagen oder um ein Elektrofahrzeug oder um ein Hybridfahrzeug handeln. Mithilfe der Antriebseinheit 2 (Verbrennungskraftmaschine oder Elektromotor) kann das Kraftfahrzeug 1 angetrieben werden. Dabei kann die Antriebseinheit 2 in einem Motorraum 3 des Kraftfahrzeugs 1 angeordnet werden.

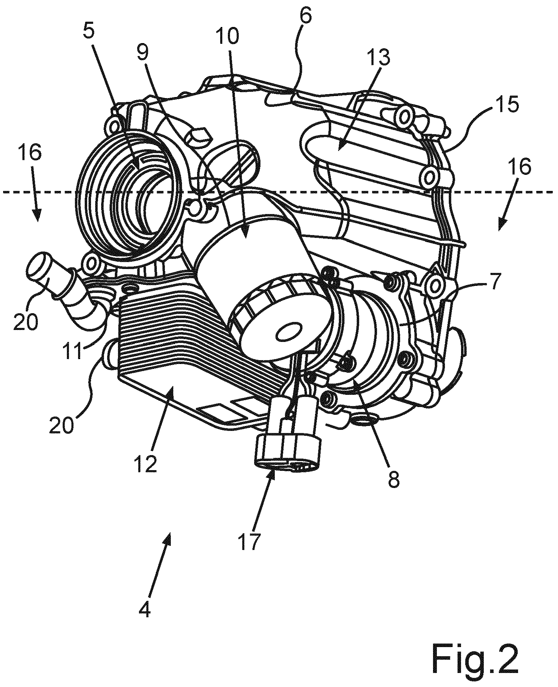

Während des Betriebs der Antriebseinheit 2 erzeugt die Antriebseinheit 2 eine thermische Wärmemenge. Insbesondere kann die Antriebseinheit 2 Temperaturen bis zu 500 Grad Celsius aufweisen. Damit die Antriebseinheit 2 nicht durch die zu hohen Temperaturen beschädigt wird, ist es notwendig, die Antriebseinheit 2 zu kühlen. Um nun die Antriebseinheit 2 zu kühlen, kann das erfindungsgemäße Kühlmodul 4 verwendet werden. Das Kühlmodul 4 kann mittels einer Anbindungsstelle 5 eines Kühlmodulgehäuses 6 (vergleiche Fig. 2) mit der Antriebseinheit 2 verbunden beziehungsweise gekoppelt werden. Somit wird das Kühlmodul 4 im Motorraum 3 angeordnet beziehungsweise befestigt beziehungsweise integriert.

Damit das Kühlmodul 4 platzsparend in dem Motorraum 3 angeordnet werden kann, ist es notwendig, dass das Kühlmodul 4 kompakt und bauraumeinsparend konzipiert ist. Dies wird dadurch gelöst, indem alle notwendigen Komponenten des Kühlmoduls am Kühlmodulgehäuse 6 integrierbar beziehungsweise aufnehmbar sind.

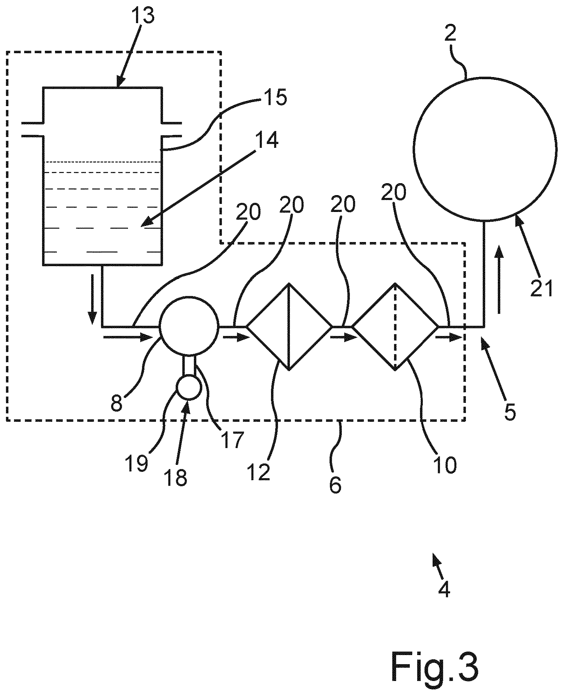

In der Fig. 2 ist eine mögliche Ausgestaltung des Kühlmoduls 4 dargestellt. Um das Kühlmodul 4 kompakt und insbesondere universell-integrierbar gestalten zu können, weist das Kühlmodulgehäuse 6 mehrere Schnittstelleneinheiten auf. Das Kühlmodulgehäuse 6 (welches beispielsweise als mechanisches Gehäuse konstruiert ist) kann eine erste Schnittstelleneinheit 7 zum Aufnehmen einer vorgegebenen Pumpeneinheit 8 aufweisen. Somit kann mithilfe der ersten Schnittstelleneinheit eine Kühlmittelpumpe beziehungsweise Wasserpumpe aufgenommen werden. Des Weiteren weist das Kühlmodulgehäuse 6 eine zweite Schnittstelleneinheit 9 auf, mit welcher eine vorgegebene Filtereinheit 10 (Filter) aufgenommen werden kann. Ebenso weist das Kühlmodulgehäuse 6 eine dritte Schnittstelleneinheit 11 zum Aufnehmen einer vorgegebenen Wärmetauscheinheit 12 auf. Des Weiteren weist das Kühlmodulgehäuse 6 neben den Schnittstelleneinheiten 7, 9, 11 einen Kühlmittelbehälter 13 (Kühlmitteltank) auf. Mithilfe des Kühlmittelbehälters 13 kann ein flüssiges oder gasförmiges Kühlmedium 14 (vergleiche Fig. 3) bereitgestellt beziehungsweise gelagert werden. Bei dem Kühlmedium 14 kann es sich beispielsweise um ein Kühlwasser oder um ein Gemisch aus Wasser und Kühlmittelzusatz handeln. Mithilfe des Kühlmediums 14 kann die entstehende thermische Energie (Wärme) der Antriebseinheit 2 aufgenommen und abtransportiert werden. Optional können mithilfe des Kühlmoduls 4 die verschiedensten, insbesondere in der Fahrzeugtechnik gebräuchlichen, Kühlmedien verwendet beziehungsweise angewendet werden. Infolgedessen kann das Kühlmodul 4 universell eingesetzt werden.

Die Schnittstelleneinheiten 7, 9, 11 bieten den Vorteil, dass in einem Grundzustand beziehungsweise Rohzustand des Kühlmoduls 4 die Komponenten 8, 10, 12 nicht am Kühlmodul 4 befestigt sind. Somit ergeben sich insbesondere die Vorteile bei der Montage des Kühlmoduls 4 im Kraftfahrzeug 1. Insbesondere kann das Kühlmodul 4 und insbesondere das Kühlmodulgehäuse 6 mehrere Schnittstellen aufweisen, wobei die jeweilige Anzahl an Schnittstellen an den jeweiligen Einsatzort des Kühlmoduls 4 angepasst werden können. Beispielsweise kann das Kühlmodulgehäuse 6 mehrere Blind-Schnittstelleneinheiten aufweisen. Somit kann ein universell einsetzbares Kühlmodulgehäuse 6 hergestellt werden und erst je nach Fahrzeugtyp und/oder Anwendungsfall können die entsprechenden Schnittstellen aktiviert und mit den jeweiligen Komponenten zusammen verbaut werden.

Um das Kühlmodul 4 kompakt und platzsparend verwenden zu können, kann ein Gehäuse 15 des Kühlmittelbehälters 13 zumindest bereichsweise, insbesondere vollständig, in das Kühlmodulgehäuse 6 integriert sein. Somit ist quasi das Gehäuse 15 des Kühlmittelbehälters 13 und das Kühlmodulgehäuse 6 ein einziges Bauteil beziehungsweise Bauelement. Daher kann bereits bei einem Herstellungsprozess des Kühlmodulgehäuses 6 das Gehäuse 15des Kühlmittelbehälters 13 integriert. Deshalb dient beispielsweise das Kühlmodulgehäuse 6 nicht nur als Gehäuse des Kühlmoduls 4, sondern gleichzeitig auch als Gehäuse 15 des Kühlmittelbehälters 13. Somit kann auf zwei verschiedene Gehäuse verzichtet werden, wodurch das Kühlmodul 4 noch kompakter und bauraumeinsparender hergestellt werden kann. Ebenfalls können dadurch auch Kosten und Herstellungsprozesse beziehungsweise Herstellungszeiten minimiert beziehungsweise reduziert werden.

Ebenfalls kann es sich bei dem Kühlmodulgehäuse 6 um zwei Teilgehäuse handeln, sodass zumindest ein Teil für das Kühlmodulgehäuse 6 an sich verwendet werden kann und der andere Teil als Gehäuse 15 des Kühlmittelbehälters 13. Somit kann das Kühlmodulgehäuse 6 vielfältig und funktionell verwendet werden.

Um eine kompakte Form beziehungsweise eine kompakte Geometrie des Kühlmoduls 4 erreichen zu können, sind die Schnittstelleneinheit 7, 9, 11 gegebenenfalls in einer gemeinsamen Hälfte 16 des Kühlmodulgehäuses 6 angeordnet. Beispielsweise können alle Schnittstelleneinheiten 7, 9, 11 in der oberen oder in der unteren Hälfte des Kühlmodulgehäuses 6 angeordnet werden. Ebenso denkbar ist, dass alle Schnittstelleneinheiten 7, 9, 11 in einem vorderen oder einem hinteren Bereich des Kühlmodulgehäuses 6 angeordnet sind. Die Anordnung der Schnittstelleneinheiten 7, 9, 11 kann unter Berücksichtigung des jeweiligen Anwendungsfalls des Kühlmoduls 4 und/oder der jeweiligen Gestalt des Motorraums 3 oder des Fahrzeugtyps des Kraftfahrzeugs 1 angepasst werden. Insbesondere sollten alle Schnittstelleneinheiten 7, 9, 11 so angeordnet werden, dass das Kühlmodulgehäuse 6 eine möglichst kompakte in sich geschlossene Geometrie beziehungsweise Form aufweist. Das bedeutet, dass das Kühlmodulgehäuse 6 keine stark herausragenden Bauteile aufweisen sollte. Somit kann das Kühlmodul 4 platzsparend in einem vorgegebenen Bereich im Motorraum 6 positioniert beziehungsweise angeordnet beziehungsweise befestigt werden.

Beispielsweise kann das Kühlmodulgehäuse 6 weitere Schnittstelleneinheiten 17 aufweisen. Beispielsweise kann an der weiteren beziehungsweise an der zumindest einen weiteren Schnittstelleneinheit 17 eine elektronische Steuerungseinheit 18 angeordnet beziehungsweise angeschlossen beziehungsweise befestigt beziehungsweise verbunden werden. Bei der elektronischen Steuerungseinheit 18 kann es sich beispielsweise um ein Steuerungsventil oder um einen Kühlwasserregler oder um einen Thermostaten handeln. Mit der elektronischen Steuerungseinheit 18 kann die Pumpeneinheit 10 gesteuert beziehungsweise angesteuert werden. Demnach kann mithilfe der elektronischen Steuerungseinheit 18 eine Förderleistung der Pumpeneinheit 10 und somit eine Fördermenge des Kühlmediums 14 gesteuert werden. Insbesondere kann mithilfe der Steuerungseinheit 18 ein Kühlmittelfluss beziehungsweise ein Kühlmittelumlauf geregelt werden. Dabei kann diese Regelung insbesondere in Abhängigkeit von einer Temperatur des Kühlmediums 14 erfolgen. Beispielsweise kann zusätzlich über die weitere Schnittstelleneinheit 17 die Pumpeneinheit 8 mit einem elektrischen Motor oder elektromechanischen Motor 19 gekoppelt beziehungsweise verbunden werden. Somit kann die Pumpeneinheit 8 in Abhängigkeit von der elektronischen Steuerungseinheit 18 mit Spannung versorgt werden.

Um die Antriebseinheit 2 des Kraftfahrzeugs 1 effizient kühlen zu können, muss ein geschlossener Kühlmittelkreislauf hergestellt werden. Dies erfolgt zum einen über die Anbindungsstelle 5, mit welcher das Kühlmodul 4 mit der Antriebseinheit 2 verbunden wird. Um nun für den Kühlprozess der Antriebseinheit 2 das Kühlmedium 14 von dem Kühlmodul 4 zur Antriebseinheit 2 fördern zu können, weist das Kühlmodul 4 Kühlkanäle 20 auf. Folglich enthält das Kühlmodul 4 zusätzlich integrierte Kühlkanäle, sodass das Kühlmedium 14 effizient der Antriebseinheit 2 bereitgestellt werden kann. Dies erfolgt insbesondere dadurch, indem ein Kühlkreislauf 21 der Antriebseinheit 2 des Kraftfahrzeugs 1 mit den Kühlkanälen 20 des Kühlmoduls 4 verbunden beziehungsweise gekoppelt werden. Somit kann das Kühlmedium 14 mithilfe der Pumpeneinheit 8 dem Kühlkreislauf 21 zugeführt werden. Demnach ist auf einfache und effiziente Weise ein in sich geschlossener Kühlkreislauf zum Kühlen der Antriebseinheit 2 geschlossen. Insbesondere kann das Kühlmedium 14 solange in dem Kühlkreislauf 21 zur Kühlung der Antriebseinheit 2 zirkulieren, bis das Kühlmedium 14 eine vorgegebene Temperatur aufweist. Wenn dies der Fall ist, dann wird mittels eines Kühlmittelkühlers 22 des Kraftfahrzeugs 1 die Wärme des Kühlmediums 14 an die Außenumgebung beziehungsweise die Außenluft in der Umgebung des Kraftfahrzeugs 1 abgegeben. Dies erfolgt wie bei den herkömmlichen Kraftfahrzeugen im Bereich des Kühlergrills des Kraftfahrzeugs 1. Um noch effizienter und schneller das Kühlmedium 14 runterkühlen zu können, können zusätzliche Lüfter (elektrisch oder mechanisch betrieben) verwendet werden.

Damit das Kühlmedium 14 nicht schon bei 100 Grad zu sieden beginnt, wird das Kühlmedium 14 in den Kühlkanälen 20 und in dem Kühlkreislauf 21 unter einem vorgegebenen konstanten Druck gehalten. Somit kann beispielsweise erreicht werden, dass durch den erhöhten Druck in dem Kühlkreislauf 21 das Kühlmedium (beispielsweise Wasser) erst zwischen 115 Grad Celsius und 130 Grad Celsius zu sieden beginnt. Somit kann das Kühlmedium 14 länger in dem Kühlkreislauf 21 zirkulieren.

Als zusätzliche Funktionalität kann das Kühlmodul 4 als Lagerung einer Gelenkwelleneinheit 23 des Kraftfahrzeugs 1 verwendet werden. Bei der Gelenkwelleneinheit 23 handelt es sich insbesondere um eine Gelenkwelle des Kraftfahrzeugs 1. Um diese Funktionalität erfüllen zu können, weist das Kühlmodulgehäuse 6 zusätzlich eine Lagerschnittstelle 24 auf. Mittels dieser Lagerschnittstelle 24 kann das Kühlmodulgehäuse 6 die zusätzliche Funktionalität der Lagerung der Gelenkwelleneinheit 23 bereithalten. An dieser Lagerschnittstelle 24, insbesondere an mehreren Lagerschnittstellen, kann insbesondere eine Gelenkwelle des Kraftfahrzeugs 1 beweglich gelagert werden. Insbesondere wird an der Lagerschnittstelle 24 die Gelenkwelle beziehungsweise die Gelenkwelleneinheit 23 frei beweglich befestigt. Somit kann der Motorraum 3 des Kraftfahrzeugs 1 kompakter gestaltet werden, da auf zusätzliche Befestigungsvorrichtungen für die Gelenkwelleneinheit 23 verzichtet werden kann.

Die Fig. 3 zeigt zur Verdeutlichung ein schematisches Blockschaltbild des Kühlmoduls 4. Dabei ist beispielsweise die Anordnung beziehungsweise die Anordnung in einer Wirkkette der einzelnen Komponenten dargestellt. Das Kühlmedium 14 kann über die Kühlkanäle 20 von dem Kühlmittelbehälter 13 mithilfe der Pumpeneinheit 8 in Richtung des Wärmetauschers 12 gepumpt beziehungsweise geleitet werden. Anschließend wird das Kühlmedium 14 mit der Filtereinheit 10 gefiltert und anschließend über die Anbindungsstelle 5 dem Kühlkreislauf 21 beziehungsweise der Antriebseinheit 2 zugeführt beziehungsweise bereitgestellt. Somit kann insbesondere ein in sich geschlossener Kühlkreislauf gewährleistet werden.

Um eine möglichst kompakte, in sich geschlossene, universell einsetzbare Einheit (Kühlmodul 4) verwenden zu können, können die Komponenten (Pumpeneinheit 8, Filtereinheit 10 und Wärmetauscheinheit 12) ausschließlich an den jeweils zugehörigen Schnittstelleneinheiten 7, 9, 11 befestigt werden. Dies ist insbesondere bei der Montage des Kühlmoduls 4 im Kraftfahrzeug 1 von Vorteil. Somit kann eine kompakte Einheit bereitgestellt werden, welche in die verschiedensten Fahrzeugmodelle beziehungsweise Fahrzeugtypen einfach und platzsparend integriert werden kann. Ebenfalls bieten die Schnittstelleneinheiten den Vorteil, dass die einzelnen Einheiten ohne große Umbaumaßnahmen beziehungsweise Reparaturmaßnahmen ausgetauscht werden können. Daher können die einzelnen Komponenten bei einem Defekt oder bei einer Wartung jederzeit problemlos ausgetauscht beziehungsweise ausgewechselt werden. Ebenfalls von Vorteil ist der, dass durch die integrierte universell einsetzbare Einheit (Kühlmodul) das Kühlmodul bei einer Demontage des Kraftfahrzeugs 1 einfach demontiert werden kann und in einem anderen Kraftfahrzeug wieder eingesetzt werden kann.

Daher kann mithilfe des Kühlmoduls 4 ein integriertes flüssigkeitsgekühltes System zum Kühlen der Antriebseinheit 2 bereitgestellt werden.

Insgesamt zeigen die Beispiele, wie ein integriertes, flüssigkeitsgekühltes System bereitgestellt werden kann.

## Patentansprüche

1. Kühlmodul (4) für ein Kraftfahrzeug (1) zum Kühlen zumindest einer Antriebseinheit (2) des Kraftfahrzeugs, mit
- einem Kühlmodulgehäuse (6), das folgende Komponenten aufweist:
- einem Kühlmittelbehälter (13) zum Bereitstellen eines flüssigen oder gasförmigen Kühlmediums (14);
- einer ersten Schnittstelleneinheit (7) zum Aufnehmen einer vorgegebenen Pumpeneinheit (8);
- einer zweiten Schnittstelleneinheit (9) zum Aufnehmen einer vorgegebenen Filtereinheit (10);
- einer dritten Schnittstelleneinheit (11) zum Aufnehmen einer vorgegebenen Wärmetauscheinheit (12),
**dadurch gekennzeichnet, dass** das Khlmodulgehäuse (6) eine Lagerschnittstelle (24) aufweist, wobei an der Lagerschnittstelle (24) eine Gelenkwelleneinheit (23) des Kraftfahrzeugs (1) zur Lagerung der Gelenkwelleneinheit (23) anordbar ist.

2. Kühlmodul (4) nach Anspruch 1,
**dadurch gekennzeichnet, dass**
die Pumpeneinheit (8), die Filtereinheit (10) und die Wärmetauscheinheit (12) an den jeweils zugehörigen Schnittstelleneinheiten (7, 9, 11) des Kühlmodulgehäuses (6) angeordnet sind.

3. Kühlmodul (4) nach Anspruch 1 oder 2,
**dadurch gekennzeichnet, dass**
das Kühlmodulgehäuse (6) eine weitere Schnittstelleneinheit (17) aufweist, wobei an der weiteren Schnittstelleneinheit (17) eine elektronische Steuerungseinheit (18) anordbar ist, und insbesondere mit der elektronischen Steuerungseinheit (18) die Pumpeneinheit (8) steuerbar ist.

4. Kühlmodul (4) nach einem der vorhergehenden Ansprüche,
**dadurch gekennzeichnet, dass**
ein Gehäuse (15) des Kühlmittelbehälters (13) zumindest bereichsweise, insbesondere vollständig, in das Kühlmodulgehäuse (6) integriert ist.

5. Kühlmodul (4) nach einem der vorhergehenden Ansprüche 2 bis 4,
**dadurch gekennzeichnet, dass**
die Schnittstelleneinheiten (7, 9, 11, 17) des Kühlmodulgehäuses (6) alle in einer gemeinsamen Hälfte des Kühlmodulgehäuses (6) angeordnet sind.

6. Kraftfahrzeug (1) mit einem Kühlmodul (4) nach einem der Ansprüche 1 bis 5.

7. Kraftfahrzeug (1) nach Anspruch 6,
**dadurch gekennzeichnet, dass**
das Kühlmodul (4) mittels einer Anbindungsstelle (5) des Kühlmodulgehäuses mit der Antriebseinheit (2) des Kraftfahrzeugs (1) verbunden ist.

8. Kraftfahrzeug (1) nach Anspruch 6 oder 7,
**dadurch gekennzeichnet, dass**
ein Kühlkreislauf (21) der Antriebseinheit (2) des Kraftfahrzeugs (1) mit Kühlkanälen (20) des Kühlmoduls (4) verbunden sind, sodass das Kühlmedium (14) des Kühlmoduls (4) dem Kühlkreislauf (21) der Antriebseinheit (2) zum Kühlen der Antriebseinheit (2) zuführbar ist.

9. Verfahren zum Montieren eines Kraftfahrzeugs (1) mit einem Kühlmodul (4) nach einem der Ansprüche 2 bis 5, wobei
- die Pumpeneinheit (8), die Filtereinheit (10), die Wärmetauscheinheit (12) und der Kühlmittelbehälter (13) des Kühlmoduls (4) in einem Motorraum (3) des Kraftfahrzeugs (1) gleichzeitig befestigt werden, indem ein Kühlmodulgehäuse (6) des Kühlmoduls (4) mit der Pumpeneinheit (8), der Filtereinheit (10), der Wärmetauscheinheit (12) und dem Kühlmittelbehälter (13) in dem Motorraum (3) befestigt wird.

## Claims

1. Cooling module (4) for a motor vehicle (1) for cooling at least one drive unit (2) of the motor vehicle, with
- a cooling module housing (6) which has the following components:
- a coolant reservoir (13) for providing a liquid or gaseous coolant medium (14);
- a first interface unit (7) for accommodating a predetermined pump unit (8);
- a second interface unit (9) for accommodating a predetermined filter unit (10);
- a third interface unit (11) for accommodating a predetermined heat exchanger unit (12),
**characterized in that**
the cooling module housing (6) has a bearing interface (24), wherein a drive shaft unit (23) of the motor vehicle (1) can be arranged on the bearing interface (24) in order to support the drive shaft unit (23).

2. Cooling module (4) according to claim 1,
**characterized in that**
the pump unit (8), the filter unit (10) and the heat exchange unit (12) are arranged at the respective associated interface units (7, 9, 11) of the cooling module housing (6).

3. Cooling module (4) according to claim 1 or 2,
**characterized in that**
the cooling module housing (6) has a further interface unit (17), wherein an electronic control unit (18) can be arranged on the further interface unit (17), and in particular the pump unit (8) can be controlled by means of the electronic control unit (18).

4. Cooling module (4) according to any one of the preceding claims,
**characterized in that**
a housing (15) of the coolant reservoir (13) is integrated at least in part, in particular completely, into the cooling module housing (6).

5. Cooling module (4) according to any one of the preceding claims 2 to 4,
**characterized in that**
the interface units (7, 9, 11, 17) of the cooling module housing (6) are all arranged in a common half of the cooling module housing (6).

6. Motor vehicle (1) with a cooling module (4) according to any one of claims 1 to 5.

7. Motor vehicle (1) according to claim 6,
**characterized in that**
the cooling module (4) is connected to the drive unit (2) of the motor vehicle (1) by means of a connection point (5) of the cooling module housing.

8. Motor vehicle (1) according to claim 6 or 7,
**characterized in that**
a cooling circuit (21) of the drive unit (2) of the motor vehicle (1) is connected to cooling channels (20) of the cooling module (4), so that the cooling medium (14) of the cooling module (4) can be supplied to the cooling circuit (21) of the drive unit (2) in order to cool the drive unit (2).

9. Method for assembling a motor vehicle (1) with a cooling module (4) according to any one of claims 2 to 5, wherein
- the pump unit (8), the filter unit (10), the heat exchange unit (12) and the coolant reservoir (13) of the cooling module (4) are mounted simultaneously in an engine compartment (3) of the motor vehicle (1) by fastening a cooling module housing (6) of the cooling module (4) with the pump unit (8), the filter unit (10), the heat exchange unit (12) and the coolant reservoir (13) in the engine compartment (3).

## Revendications

1. Module de refroidissement (4) pour un véhicule automobile (1) destiné au refroidissement d'au moins une unité d'entraînement (2) du véhicule automobile, avec
- un carter de module de refroidissement (6) qui présente les composants suivants :
- un récipient d'agent de refroidissement (13) destiné à la fourniture d'un fluide de refroidissement liquide ou gazeux (14) ;
- une première unité d'interface (7) destinée à la réception d'une unité de pompage (8) prédéfinie ;
- - une deuxième unité d'interface (9) destinée à la réception d'une unité de filtrage (10) prédéfinie ;
- une troisième unité d'interface (11) destinée à la réception d'une unité d'échange de chaleur (12) prédéfinie
**caractérisé en ce que**
le carter de module de refroidissement (6) présente une interface de palier (24), dans lequel une unité d'arbre de transmission (23) du véhicule automobile (1) peut être disposée au niveau de l'interface de stockage (24) pour le support de l'unité d'arbre de transmission (23).

2. Module de refroidissement (4) selon la revendication 1,
**caractérisé en ce que**
l'unité de pompage (8), l'unité de filtrage (10) et l'unité d'échange de chaleur (12) sont disposées au niveau des unités d'interface (7, 9, 11) respectives du carter de module de refroidissement (6).

3. Module de refroidissement (4) selon la revendication 1 ou 2,
**caractérisé en ce que**
le carter de module de refroidissement (6) présente une autre unité d'interface (17), dans lequel une unité de commande électronique (18) peut être disposée au niveau de l'autre unité d'interface (17), et en particulier l'unité de pompage (8) peut être commandée avec l'unité de commande électronique (18).

4. Module de refroidissement (4) selon l'une quelconque des revendications précédentes,
**caractérisé en ce que**
un carter (15) du récipient d'agent de refroidissement (13) est intégré au moins par zones, en particulier complètement, dans le boîtier de module de refroidissement (6).

5. Module de refroidissement (4) selon l'une quelconque des revendications 2 à 4, **caractérisé en ce que**
les unités d'interface (7, 9, 11, 17) du carter de module de refroidissement (6) sont toutes disposées dans une moitié commune du carter de module de refroidissement (6).

6. Véhicule automobile (1) avec un module de refroidissement (4) selon l'une quelconque des revendications 1 à 5,

7. Véhicule automobile (1) selon la revendication 6,
**caractérisé en ce que**
le module de refroidissement (4) est relié à l'unité d'entraînement (2) du véhicule automobile (1) au moyen d'un point de rattachement (5) du carter de module de refroidissement.

8. Véhicule automobile (1) selon la revendication 6 ou 7,
**caractérisé en ce que**
un circuit de refroidissement (21) de l'unité d'entraînement (2) du véhicule automobile (1) est relié à des canaux de refroidissement (20) du module de refroidissement (4), de sorte que le fluide de refroidissement (14) du module de refroidissement (4) peut être amené au circuit de refroidissement (21) de l'unité d'entraînement (2) pour le refroidissement de l'unité d'entraînement (2).

9. Procédé destiné au montage d'un véhicule automobile (1) avec un module de refroidissement (4) selon l'une quelconque des revendications 2 à 5, dans lequel
- l'unité de pompage (8), l'unité de filtrage (10), l'unité d'échange de chaleur (12) et le récipient d'agent de refroidissement (13) du module de refroidissement (4) sont fixés simultanément dans un compartiment moteur (3) du véhicule automobile (1) en fixant un carter de module de refroidissement (6) du module de refroidissement (4) à l'unité de pompage (8), l'unité de filtrage (10), l'unité d'échange de chaleur (12) et au récipient d'agent de refroidissement (13) dans le compartiment moteur (3).
